Europäisches Patentamt

European Patent Office

Office européen des brevets

(11) Veröffentlichungsnummer: **0 468 086 A1**

## EUROPÄISCHE PATENTANMELDUNG

(21) Anmeldenummer: **90118823.5**

(22) Anmeldetag: **29.09.90**

(51) Int. Cl.5: **B62C 3/02**, B62D 13/02

(30) Priorität: **24.07.90 DE 9010970 U**
**03.08.90 EP 90114941**

(43) Veröffentlichungstag der Anmeldung:
**29.01.92 Patentblatt 92/05**

(84) Benannte Vertragsstaaten:
**AT BE DE DK ES FR GB IT LU NL SE**

(71) Anmelder: **KUHNLE GMBH**
**Gründelweg 66**
**W-7274 Haiterbach-Beihingen(DE)**

(72) Erfinder: **Kühnle, Paul**
**Gründelweg 66**
**W-7274 Haiterbach-Beihingen(DE)**

(74) Vertreter: **Ott, Elmar, Dipl.-Ing. et al**
**Patentanwalt Ott und Partner Kappelstrasse 8**
**W-7240 Horb 1(DE)**

(54) Kutsche mit einer lenkbaren Achse.

(57) Es wird eine Kutsche mit einer lenkbaren Achse (2) vorgeschlagen bei der die Deichsel (14) schwenkbar am Kutschenrahmen (1) befestigt ist und durch eine Längsführung am Drehgestell (3) hindurchgreift. Beim Einschlagen der Deichsel ist somit der Deichsel-Einschlagwinkel größer als der Einschlagwinkel der lenkbaren Achse, so daß von einem Nachlauf der lenkbaren Achse gesprochen werden kann. Gegenüber der Vorderkante des Drehgestells verkürzt sich die Deichsel mit zunehmenden Einschlagwinkel.

Fig.2

Die Erfindung betrifft eine Kutsche mit einer lenkbaren Achse gemäß der Gattung des Hauptanspruchs.

Es sind Pferdekutschen bekannt, die an einer lenkbaren Achse eine nach vorne abstehende Deichsel haben. Diese Kutschen können als Einspänner oder Mehrspänner gefahren werden, wobei die Laufrichtung der eingespannten Pferde die jeweilige Stellung der Deichsel und somit den Lenkeinschlag bestimmt. Werden diese Kutschen im Gelände eingesetzt, so treten häufig Probleme beim Umfahren von Hindernissen, wie Bäumen, Sträuchern oder dergleichen, auf. Insbesondere bei dicht aufeinanderfolgenden Hindernissen ist ein problemloses Umfahren der Hindernisse sehr schwierig und manchmal nur durch Rangieren möglich.

Der Erfindung liegt die Aufgabe zugrunde, eine lenkbare Kutsche zu schaffen, mit der Hindernisse problemloser umfahren werden können.

Die Lösung dieser Aufgabe wird dadurch erreicht, daß beim seitlichen Auslenken der Deichsel, der Einschlagwinkel bei der Deichsel größer ist als der des Drehgestells. Das Drehgestell hat also gegenüber der Deichsel einen gewissen Nachlauf. Der Einschlagwinkel der Deichsel ist steiler als der des Drehgestells, so daß die an der Deichsel angespannten Pferde einen engeren Radius laufen können als dies bei herkömmlichen Kutschen mit starr am Drehgestell abstehender Deichsel möglich ist.

Eine Weiterbildung der Erfindung sieht vor, daß das dem Kutschenrahmen zugewandte Ende der Deichsel an diesem vor dem Drehmittelpunkt des Drehgestells seitlich schwenkbar in einem Schwenklager gelagert ist, und daß die Deichsel durch eine an dem Drehgestell im Abstand von dem Schwenklager befestigte Längsführung hindurchgreift. Durch die ortsfeste, gelenkige Anbringung des Deichselendes im Abstand vom Drehmittelpunkt des Drehgestells wird erreicht, daß beim Einschlagen der Deichsel und dem damit verbundenen Einschlag des Drehgestells die Deichsel einige Zentimeter gegenüber der Vorderkante des Drehgestells in der Längsführung zurückgezogen wird. Die Deichsel verkürzt sich beispielsweise bei maximalem Einschlagwinkel um ca. 30 bis 40 cm. Dadurch wird ebenfalls ein Umfahren von aufeinanderfolgenden Hindernissen wesentlich erleichtert.

Die Längsführung für die Deichsel kann als Führungshülse oder Führungsring ausgebildet sein und kann drehbar am Drehgestell montiert sein. Beim Einschlagen der Deichsel verschiebt sich deren Ende in Längsrichtung innerhalb der Längsführung. Im Bereich der Längsführung bis zum Ende der Deichsel kann diese ein metallisches Endstück aufweisen, welches die Funktion eines Läufers hat. Vorteilhafte Weiterbildungen sind in den übrigen Unteransprüchen gekennzeichnet. Die Erfindung wird nachfolgend anhand der Zeichnung näher erläutert. Es zeigen:

Figur 1 die schematisierte Draufsicht auf ein am Kutschenrahmen befestigtes Drehgestell mit Deichselendstück bei senkrecht ausgerichteter Deichsel,

Figur 2 bis Figur 6 unterschiedliche Positionen von Deichsel und Drehgestell bei unterschiedlichen Einschlagwinkeln, und

Figur 7 eine Seitenansicht im Bereich der Deichselbefestigung.

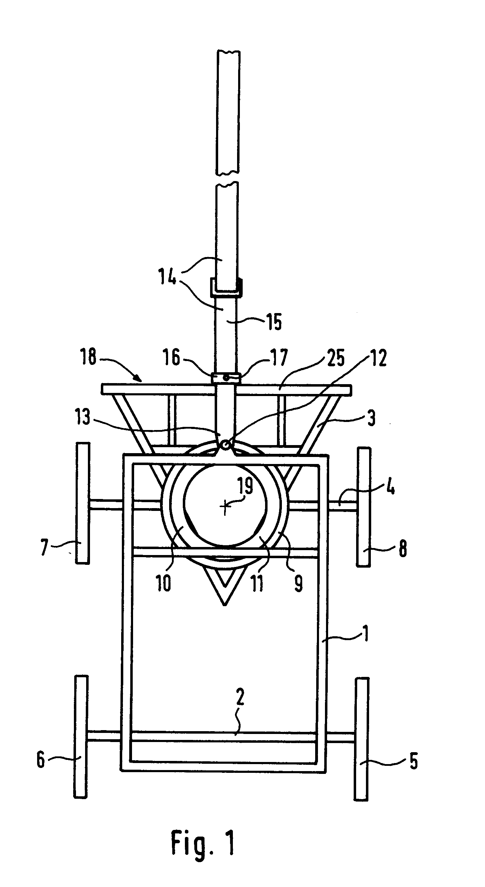

In Figur 1 ist das Kutschengestell 1 stark vereinfacht als einfacher Rahmen dargestellt, auf dem der hier nicht dargestellte Kutschenaufbau montiert ist. An der Unterseite des Kutschenrahmens 1 ist eine hintere starre Achse 2 und ein Drehgestell 3 mit lenkbarer Achse 4 montiert. Außen an den Achsen befinden sich die Räder 5 bis 8.

Das Drehgestell 3 ist am drehbaren Teil 9 eines Drehkranzes 10 befestigt, wobei das nicht drehbare Teil 11 des Drehkranzes 10 an den Kutschenrahmen 1 montiert ist.

Am Kutschenrahmen 1 ist ein Schwenklager 12 angebracht, an welchem das hier dargestellte Ende 13 der Deichsel 14 schwenkbar gelagert ist. Das Deichselende wird von einem Deichselendstück 15 gebildet, das im wesentlichen als Vierkantrohr ausgebildet ist. Dieses Deichselendstück 15 ist in einer Längsführung 16 längsverschiebbar gelagert, während die Längsführung 16 um eine senkrechte Achse 17 drehbar am Drehgestell 3 befestigt ist.

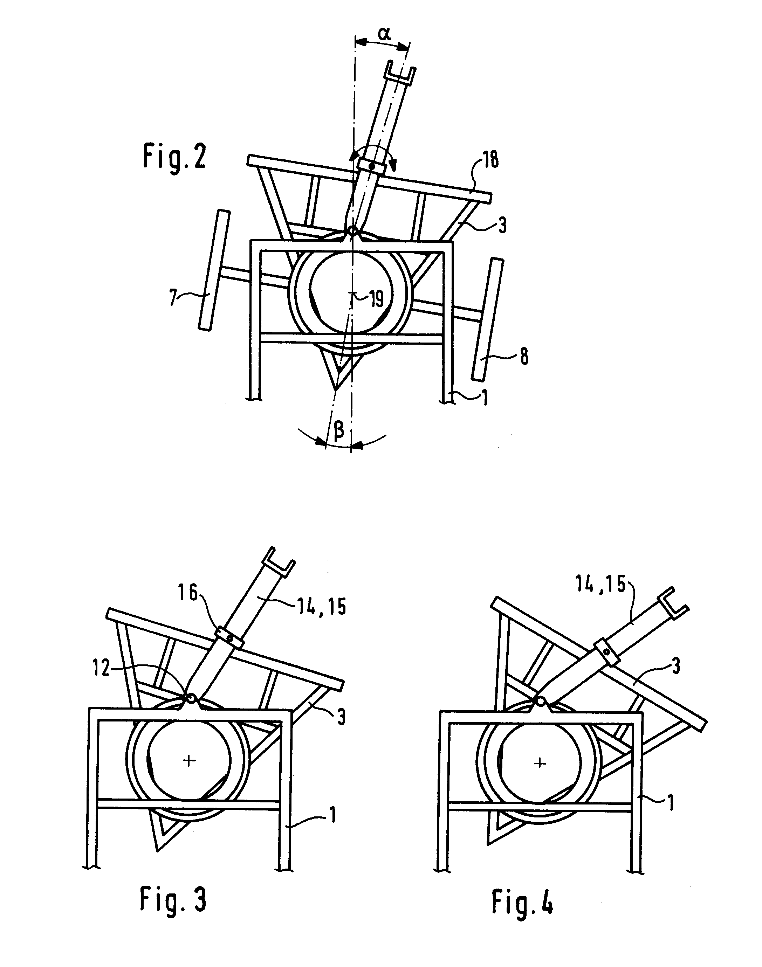

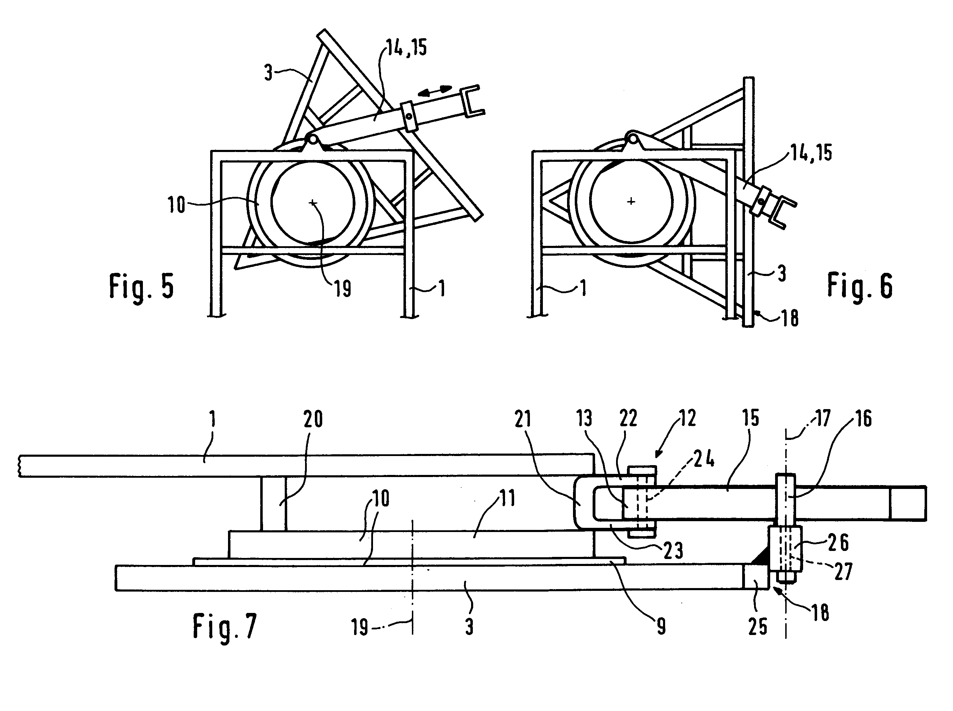

In den Figuren 2 bis 6 sind nun unterschiedliche Einschlagwinkel der Deichsel und des Drehgestells dargestellt. Aus diesen Abbildungen wird insbesondere ersichtlich, daß die Deichsel sich mit zunehmenden Einschlagwinkel $\alpha$ immer mehr gegenüber der Vorderkante 18 des Drehgestells 3 verkürzt. Insbesondere in Figur 6 ist dies sehr deutlich ersichtlich, da dort das Deichselendstück bereits vollständig nach innen zurückgezogen ist.

Die Figuren 2 bis 6 zeigen auch sehr deutlich, daß der Einschlagwinkel $\alpha$ der Deichsel 14 kürzer ist als der Einschlagwinkel $\beta$ des Drehgestells 3. In der Zeichnung ist der Drehmittelpunkt 19 des Drehgestells 3 mit jeweils einem Kreuz gekennzeichnet.

In Figur 7 ist eine Seitenansicht im Bereich der Deichselbefestigung dargestellt, die insbesondere einen Teil des Kutschenrahmens 1, das an einem Drehkranz 10 befestigte Drehgestell 3 und das Deichselendstück 15 mit der Längsführung 16 und dem Schwenklager 12 zeigt. Der obere Teil des Drehkranzes 10 ist das nicht drehbare Teil 11, welches mit dem Rahmen 1 über ein Verbindungsstück 20 und über einen starren Lagerbügel 21 fest verbunden ist. Das untere Teil 9 des Drehkranzes 10 ist in an sich bekannter Weise am Teil 11 drehbar gelagert, so daß das mit dem Teil 9 fest verbundene Drehgestell 3 ebenfalls um die Mittelachse 19 des Drehkranzes 10 drehbar ist.

Der Lagerbügel 21 ist ein im wesentlichen U-förmig ausgebildeter Bügel, der an seinen beiden gegenüberliegenden Bügelseitenwänden 22, 23 eine durchgehende Schwenkachse 24 besitzt, die mit unterbrochener Linie dargestellt ist und das Deichselendstück 15 am Ende 13 durchdringt. Der Lagerbügel 21 ist oben mit dem Rahmen 1 und unten mit Teil 11 des Drehkranzes 10 verschweißt oder verschraubt.

Das Drehgestell 3 besitzt an seiner Vorderkante 18 eine senkrecht zur Bildebene verlaufende Traverse 25, die beispielsweise in der Draufsicht von Figur 1 ebenfalls ersichtlich ist. An der Traverse ist ein Lagerkörper 26 befestigt, der eine an der Längsführung 16 nach unten abstehende Achse 27 aufnimmt. Die Achse 27 ist mit unterbrochenen Linien dargestellt. Die Längsführung 16, die als geschlossener Bügel das Deichselendstück 15 umschließt, ist somit um die geometrische Achse 17 drehbar. Die Längsführung 16 kann sich damit in die jeweilige Richtung der Deichsel 14 ausrichten, wie dies aus den Figuren 2 bis 6 ersichtlich ist. Es wird angemerkt, daß der Übersichtlichkeit wegen sämtliche Aufbauten und sonstigen Einrichtungen, die am Kutschenrahmen 1 bei einer fertigen Kutsche befestigt sind, nicht dargestellt wurden. Ebenso wurde auf eine Darstellung der lenkbaren Achse 4 in die Zeichnung gemäß Figur 7 nicht aufgenommen, da die lenkbare Achse 4 in an sich bekannter Weise am Drehgestell 3 befestigt ist und im übrigen aus den Figuren 1 bis 6 ersichtlich ist.

## Patentansprüche

1. Kutsche mit einer lenkbaren Achse, die an einem drehbar am Kutschenrahmen montierten Drehgestell angebracht ist, wobei vorne am Drehgestell eine Deichsel absteht, **dadurch gekennzeichnet**, daß beim seitlichen Auslenken der Deichsel (14) der Einschlagwinkel ($\alpha$) bei der Deichsel (14) größer ist als der Einschlagwinkel ($\beta$) des Drehgestells (3).

2. Kutsche nach Anspruch 1, **dadurch gekennzeichnet**, daß das dem Kutschenrahmen (1) zugewandte Ende (13) der Deichsel (14) an diesem vor dem Drehmittelpunkt des Drehgestells (3) seitlich schwenkbar in einem Schwenklager (12) gelagert ist, und daß die Deichsel durch eine an dem Drehgestell (3) im Abstand von dem Schwenklager (12) befestigte Längsführung (16) hindurchgreift.

3. Kutsche nach Anspruch 2, **dadurch gekennzeichnet**, daß die Längsführung (16) drehbar am Drehgestell (3) angebracht ist.

4. Kutsche nach einem der Ansprüche 2 bis 3, **dadurch gekennzeichnet**, daß das Drehgestell (3) an dem drehbaren Teil (9) eines Drehkreuzes (10) befestigt ist, während das andere Teil (11) des Drehkreuzes (10) ortsfest mit dem Kutschenrahmen (1) verbunden ist.

5. Kutsche nach einem der Ansprüche 2 bis 4, **dadurch gekennzeichnet**, daß die Längsführung (16) ein die Deichsel (14) umgreifender Bügel ist, an dem nach unten eine Achse (27) absteht, die in ein Lagerteil (26) eingreift, welches in der Mitte des vorderen Teils des Drehgestells (3) befestigt ist.

6. Kutsche nach einem der Ansprüche 2 bis 5, **dadurch gekennzeichnet**, daß das Schwenklager (12) aus einem U-förmigen Lagerbügel (21) und einer durch dessen übereinander befindlichen Seitenwände (22, 23) hindurchgreifenden Achse (24) besteht, die durch das Ende (13) der Deichsel (14) hindurchgreift.

7. Kutsche nach einem der vorhergehenden Ansprüche, **dadurch gekennzeichnet**, daß die Deichsel (14) zwischen dem das Drehgestell (3) tragenden Drehkranz (10) und dem darüber befindlichen Kutschenrahmen (1) an ihrem Ende (13) schwenkbar gelagert ist, und daß das Drehgestell (3) über einen als Längsführung (16) oder dergleichen ausgebildeten Mitnehmer, der an der Deichsel (14) angreift, beim Einschlagen der Deichsel (14) ausgelenkt wird.

Fig. 1

Fig.2

Fig. 3

Fig. 4

Fig. 5

Fig. 6

Fig. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-536 085 (SOCIETE ANONYME DES ANCIENS ETA-BLISSEMENTS CAIZERGUE ET RICHARD) <br> * das ganze Dokument * <br> – – – | 1-6 | B 62 C 3/02 <br> B 62 D 13/02 |
| X | FR-A-340 143 (AUGUSTE-EUGENE BRILLIE) <br> * Seite 1, Zeile 46 - Seite 1, Zeile 57; Figuren 3, 4 * <br> – – – | 1-6 | |
| X,A | EP-A-0 122 527 (H.EVERS) <br> * Zusammenfassung; Figuren * <br> – – – – – | 1-4,5,6 | |
| | | | **RECHERCHIERTE SACHGEBIETE (Int. Cl.5)** |
| | | | B 62 C <br> B 62 D |

**Der vorliegende Recherchenbericht wurde für alle Patentansprüche erstellt**

| Recherchenort | Abschlußdatum der Recherche | Prüfer |
|---|---|---|
| Den Haag | 17 Januar 91 | FRANKS B.G. |